# EUROPEAN PATENT APPLICATION

(11) **EP 1 633 069 A1**
(43) Date of publication of application: **08.03.2006**
(21) Application number: 04292157.7
(22) Date of filing: 02.09.2004
(51) Int. Cl.: H04L 1/00

(54) **Communication units, system, and method of link adaptation thereof**

(71) Applicant: MOTOROLA, INC., Schamburg, Illinois 60196 (US)
(72) Inventor: Simoens, Sebastien, Motorola SA, 91193 St Aubin (FR); Pellati, Pietro, Motorola SA, 91193 St. Aubin (FR); Ribeiro Dias, Alexandre, Motorola SA, 91193 St. Aubin (FR); Gosteau, Jeremy, Motorola SA, 91193 St. Aubin (FR); Rouquette-Leveil, Stephanie, Motorola SA, 91193 St. Aubin (FR)
(74) Representative: Cross, Rupert Edward Blount

(57) **Abstract**

In a communication system (100), a first communication unit (101) comprises a transmitter (105) transmitting a first message to a second communication unit (103) over a communication link. The second communication unit (103) comprises a capacity processor (113) which determines a channel capacity indication associated with the communication link and a transmitter (111) for transmitting this to the first communication unit (101). The first communication unit (101) further comprises a transmit controller (115) which may adjust characteristics of current or future transmission in response to the received channel capacity indication. The invention may provide improved link adaptation by using a channel capacity indication fed back from a receiver.

## Description

### Field of the invention

The invention relates to a communication system, communication units and methods of link adaptation therefor.

### Background of the Invention

In recent years, the popularity of communication systems using wired or wireless communication has increased substantially. For example, cellular communication systems and wireless or wired data networks have become commonplace and the increased requirement for optimal use of the available communication resource has led to an increased desire for efficient communication.

Accordingly many techniques have been proposed in order to achieve a more use of the available communication resource. One such technique is link adaptation where characteristics of one or more communications are dynamically adjusted to suit the current conditions. Currently, there is thus a trend towards optimizing transmission parameters for the varying link quality of a communication link. For wireless links, the link quality typically fluctuates due to variations in the propagation and interference conditions while in wired systems cross-talk is typically responsible for link quality variations. This results in a dynamic variation of the short-term communication capacity of the communication link. In link adaptation systems, the communication system may continuously adapt the transmitted data rate for the current link quality by selecting the optimum transmission mode where a transmission mode corresponds to a particular configuration of the transmitter such as a specific modulation scheme, a specific error coding scheme, a number of antennas used and a specific multiple-antenna coding scheme.

Known adaptive mechanisms are Adaptive Modulation and Coding (AMC) or Hybrid Automatic Repeat reQuest (HARQ) techniques which seek to maximize the momentary throughput of the link by changing transmission characteristics dependent on a specified metric which is considered to be representative of the current link quality.

In most wireless systems, the Packet Error Rate (PER) is the parameter which ultimately determines the throughput and Quality of Service (QoS) obtained from the receiver (e.g. at the interface between the MAC/RLC layer and higher layers). However, it is difficult for a transmitter to predict the PER of the communication link it is currently transmitting on for the following reasons:
Firstly, the PER depends on the Signal to Noise plus Interference Ratio (SNIR) at the receiver. The SNIR depends on a number of factors including the transmit power of the transmitted signal, the receive noise floor of the receiver, the interference at the receiver and the current attenuation (or path loss/ path gain) of the propagation path between the transmitter and the receiver. However it is in general very difficult for the transmitter to estimate the SNIR at the receiver because the relevant parameters are only known with an accuracy of typically several dBs. For instance, in the Institute of Electrical and Electronic Engineers' Wireless Local Area Network standards IEEE802.11a/g, the transmit power inaccuracy can be greater than 3dB, the noise floor can vary by 3dB between a lower-cost and a higher-cost implementation, the interference power is typically unpredictable and the path loss varies depending on fast changes in the propagation environment.

Even if the SNIR was known, the PER also depends significantly on the exact propagation characteristics of the communication channel as for example represented by the associated channel coefficients. In an IEEE 802.11a system, this represents 52 coefficients for each packet. In a 4x4 Multiple Antennas configuration, 16x52 = 832 coefficients should be known. The PER is therefore theoretically a function of several hundreds of variables, which should be individually estimated.

The PER furthermore depends on the performance of the digital signal processing algorithms implemented in the receiver. These algorithms are typically not standardized and a significant variation between receivers may occur. In particular, a difference of several dBs in PER vs. SNIR performance on the same channel can typically be observed between different manufacturers. Also, even if an accurate estimate of the PER for previously transmitted packets is generated, this may not be applicable to the current conditions.

The PER may also depend significantly on the characteristics of the communication link between the transmitter and receiver. As a specific example, in an IEEE 802.11a system, the throughput for a given bit rate is given by ρ=r(1-PER) where r is the bit rate. Simulations for a rate of r=54 Mbit/s shows that for a given momentary SNIR of for example 24dB, the throughput can vary from around 16 Mbit/s to 53.5 Mbit/s depending on the specific characteristics of the channel. This phenomenon is called catastrophic link adaptation and may cause a huge throughput drop which can last for a very long time if the propagation environment is slowly varying. A solution can be to set the transmission characteristics based on the performance of the worst channel. However, this worst case approach results in a significant performance loss. Since the PER determines the throughput, another solution is to estimate the PER by detecting packet errors in previous transmissions. However, this requires a large number of packet errors to be detected in order to generate a reliable PER estimate. For example, 1000 packets are required to estimate a PER of 1% with a reasonable precision. This can correspond to many times the coherence time of the channel thereby rendering the estimate out of date and resulting in degraded performance.

It has also been proposed that future values of complex channel coefficients may be predicted and used to adaptively vary the transmission characteristics used by the transmitter. However, such a prediction is extremely complex and requires a large number of computations to be performed.

Hence, an improved communication system would be advantageous and in particular a system allowing for reduced complexity, improved link adaptation, increased resource efficiency and/or improved performance would be advantageous.

### Summary of the Invention

Accordingly, the Invention seeks to preferably mitigate, alleviate or eliminate one or more of the above mentioned disadvantages singly or in any combination.

According to a first aspect of the invention there is provided a communication system comprising: means for transmitting a first message from a first communication unit to a second communication unit over a communication link; means in the second communicating unit for determining a channel capacity indication associated with the communication link; means for transmitting the channel capacity indication from the second communication unit to the first communication unit; means for transmitting a second message from the first communication unit to the second communication unit; and means for setting a characteristic of the transmission of the second message in response to the channel capacity indication.

The invention may provide an improved communication system. Link adaptation may be improved and/or complexity may be reduced. For example, an improved adaptation to current conditions may be achieved resulting in improved communication and/or reduced resource consumption and/or increased communication rates. The complexity of determining a channel capacity indication suitable for link adaptation may be reduced and/or the invention may provide link adaptation dependent in response to a better suited parameter. Improved resource usage may be achieved resulting in an improved communication capacity of the communication system as a whole. The resource associated with communicating an indication for link adaptation may be reduced. For example the channel capacity indication may be a single scalar parameter.

In some embodiments, the channel capacity indication may be normalized to the signal bandwidth of the communication link.

The first and second message may be part of separate transmissions such as different data packets or may for example be parts of the same transmission such as different groups, sections or elements of data of the same transmission.

According to an optional feature of the invention, the second communication unit comprises means for determining the channel capacity indication in response to the first message. The means for determining the channel capacity may determine the channel capacity indication in response to a receive characteristic for the first message. This may provide a suitable way of determining the channel capacity.

According to an optional feature of the invention, the first communication unit comprises means for predictively filtering received channel capacity indications. The means for predictively filtering may determine a channel capacity estimate suitable for the second message. For example, based on previously received channel capacity indications the variations in the channel capacity may be estimated and used to estimate the channel capacity at the time of transmitting the second message. The feature may allow improved link adaptation.

According to an optional feature of the invention, the communication system comprises means for communicating error rate to channel capacity association information between the first and second communication unit. The error rate to channel capacity association information may for example comprise receiver error performance for a pre-agreed set of channels, bit-rates and Shannon capacity values for the second communication unit allowing the first communication unit to determine an error performance in response to the received channel capacity indication.

According to an optional feature of the invention, the communication system further comprises means for communicating error rate to channel characteristic association information between the first and second communication unit. The error rate to channel characteristic association information may allow the first communication unit to determine an error rate in response to channel characteristics of the communication link thereby allowing for an improved accuracy. The error rate to channel characteristic association information may for example comprise receiver error performance for a pre-agreed set of channels, bit-rates and Shannon capacity values for the second communication unit allowing the first communication unit to determine an error performance in response to the received channel capacity indication.

According to an optional feature of the invention, the error rate is a Packet Error Rate (PER). This may provide improved link adaptation in response to a parameter indicative of the effective throughput.

According to an optional feature of the invention, the communication system further comprises means for communicating packet error rate to bit error rate association information between the first and second communication unit. This may allow the first communication unit to determine a packet error rate with increased accuracy.

According to an optional feature of the invention, the means for setting the characteristic is further operable to set the characteristic in response to the association information. This may allow improved link adaptation and improved performance of the communication system.

According to an optional feature of the invention, the means for determining the channel capacity indication is operable to determine the channel capacity indication in response to a first channel capacity estimation algorithm and the second communication unit further comprises means for determining a second channel capacity indication associated with the communication link in response to a second channel capacity estimation algorithm. The second communication unit may determine a plurality of channel capacity indications in response to different channel capacity estimation algorithms. This may allow channel capacity indications to be determined in accordance with algorithms optimised for different conditions and may provide improved performance.

According to an optional feature of the invention, the second communication unit further comprises means for transmitting the second channel capacity indication from the second communication unit to the first communication unit; and the first communication unit comprises means for selecting between the channel capacity indication and the second channel capacity indication in response to a transmit characteristic associated with the communication link. The feature may allow selection of the channel capacity indication determined in response to an algorithm best suited for the current conditions. For example, the channel capacity indication of the algorithm best suited for the forward error correction code and/or modulation scheme currently employed may be selected resulting in improved performance.

According to an optional feature of the invention, the channel capacity indication is a Shannon channel capacity indication. This may provide a suitable parameter for link adaptation.

According to an optional feature of the invention, the communication system further comprises means for communicating a time indication associated with the channel capacity indication. This may allow for an improved determination of e.g. a current channel capacity estimate. For example, it may improve and/or facilitate predictive filtering of the channel capacity indication.

According to an optional feature of the invention, the means for transmitting the channel capacity indication comprises means for transmitting the channel capacity indication in a retransmission response message. The retransmission response message may be an acknowledge/non-acknowledge message of an Automatic Repeat reQuest (ARQ) transmission scheme. This may provide for an advantageous way of communicating the channel capacity indication and may exploit the synergy between the ARQ functionality and link adaptation in response to the channel capacity indication.

According to an optional feature of the invention, the first and second messages belong to different data packets.

According to an optional feature of the invention, the second communication unit is operable to transmit channel capacity indications at a rate of more than twice the coherency time of the communication link. This may allow the channel capacity indication to reflect variations in the communication link.

According to an optional feature of the invention, the communication system further comprises means of communicating the channel capacity indication from the first communication unit to a third communication unit. This may allow the channel capacity indication to be used by other communication units. This may be particularly advantageous in for example ad hoc networks where the communication link may be part of a communication between the third communication unit and the first communication unit. The feature may for example allow the channel capacity indication to propagate through an ad hoc network.

According to a second aspect of the invention, there is provided a communication unit comprising: means for transmitting a first message from the communication unit to a second communication unit over a communication link; means for receiving a channel capacity indication associated with the communication link from the second communication unit;
means for transmitting a second message from the first communication unit to the second communication unit; and
means for setting a characteristic of the transmission of the second message in response to the channel capacity indication.

According to a third aspect of the invention, there is provided a communication unit comprising: means for receiving a first message from a second communication unit over a communication link; means for determining a channel capacity indication associated with the communication link; means for transmitting the channel capacity indication to the second communication unit.

According to a fourth aspect of the invention, there is provided a method of link adaptation for a communication system, the method comprising the steps of: transmitting a first message from a first communication unit to a second communication unit over a communication link; determining in the second communicating unit a channel capacity indication associated with the communication link; transmitting the channel capacity indication from the second communication unit to the first communication unit; transmitting a second message from the first communication unit to the second communication unit; and setting a characteristic of the transmission of the second message in response to the channel capacity indication.

According to a fifth aspect of the invention, there is provided a method of transmitting from a communication unit, the method comprising the steps of:
transmitting a first message from the communication unit to a second communication unit over a communication link; receiving a channel capacity indication associated with the communication link from the second communication unit;
transmitting a second message from the first communication unit to the second communication unit; and setting a characteristic of the transmission of the second message in response to the channel capacity indication.

According to a sixth aspect of the invention, there is provided a method of transmitting link adaptation information, the method comprising the steps of: means for receiving a first message from a second communication unit over a communication link; means for determining a channel capacity indication associated with the communication link; means for transmitting the channel capacity indication from to the second communication unit.

These and other aspects, features and advantages of the invention will be apparent from and elucidated with reference to the embodiment(s) described hereinafter.

### Brief Description of the Drawings

An embodiment of the invention will be described, by way of example only, with reference to the drawings, in which
FIG. 1 illustrates a communication system in accordance with an embodiment of the invention;
FIG. 2 illustrates a relationship between a Packet Error Performance and a Signal to Noise Ratio for a communication link; and
FIG. 3 illustrates a relationship between a Packet Error Performance and a Channel Capacity for a communication link.

### Detailed Description of Embodiments of the Invention

The following description focuses on an embodiment of the invention applicable to a wireless radio communication system but it will be appreciated that the invention is not limited to this application but may be applied to many other communication systems.

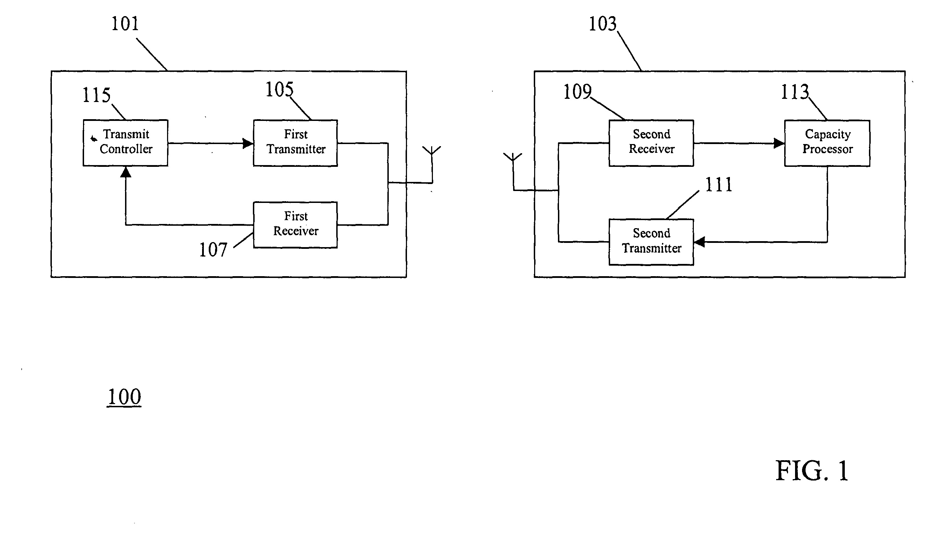

FIG. 1 illustrates a communication system 100 in accordance with an embodiment of the invention. The communication system 100 comprises a first communication unit 101 and a second communication unit 103 communicating over a radio connection. The communication system may be a Wireless Local Area Network (WLAN) with the first and second communication units being wireless nodes or may for example be a cellular communication system with one of the first and second communication units being a base station and the other being a mobile station.

The first communication unit 101 comprises a first transmitter 105 and a first receiver 107 and the second communication unit 101 comprises a second receiver 109 and a second transmitter 111. The first transmitter 105 is operable to transmit data over the radio connection such that it can be received by the second receiver 109 and the second transmitter 111 is operable to transmit data over the radio connection such that it can be received by the first receiver 107. It will be appreciated that the first communication unit 101 and the second communication unit 103 further comprises any functionality required or desired for effecting wireless communications in accordance with the specifications and requirements of the specific communication system as will be well known by the person skilled in the art.

In accordance with the embodiment of FIG. 1, the characteristics of the radio communication link from the first communication unit 101 to the second communication unit 103 vary dynamically. For example the propagation characteristics may change due to movement of one of the communication units or other movements in the propagation environment. Accordingly the communication link may exhibit fades. Similarly, the interference at the second communication unit 103 may vary in response to e.g. transmissions by other remote units (not shown).

In order to exploit the available communication resource effectively, the communication system applies link adaptation for at least the communication link between the first communication unit 101 and the second communication unit 103. Specifically, the first communication unit 101 comprises means for changing the transmitted data rate, the modulation scheme used and the Forward Error Correcting (FEC) scheme depending on the current propagation and interference conditions. Thus, when the path loss and interference levels are low, the data rate may be increased, a higher rate error coding and a higher constellation modulation scheme may be used resulting in a higher throughput; whereas when the path loss and interference levels are high, the data rate may be reduced and a lower rate error coding and a smaller constellation modulation scheme may be used. The dynamic adaptation to the characteristics of the communication link results in a more reliable communication and/or an increased average throughput rate.

In order to perform link adaptation, the transmission characteristics should be modified in response to a suitable metric which is indicative of the channel conditions for the communication link. The performance of the link adaptation is highly dependent on the parameter(s) which is (are) used and the determination of a suitable link adaptation metric is one of the most critical design parameters for a link adaptation system.

In accordance with the embodiment of FIG. 1, link adaptation is based on a channel capacity measure which is determined by the second communication unit 103 and reported to the first communication unit 101 where it is used to set the transmit characteristics.

Specifically, the second communication unit 103 comprises a capacity processor 113 which is operable to determine (generate) a channel capacity indication which is indicative of the channel capacity of the communication link from the first communication unit 101 to the second communication unit 103. The channel capacity indication is reported back to the first communication unit 101 which comprises a transmit controller 115 that is configured to modify transmission characteristics used by the first transmitter 105.

In accordance with the embodiment of FIG. 1, the first transmitter 105 may transmit a first message in a first data packet. The message is received by the second transmitter 109 which determines a number of receive characteristics associated with the reception of the data packet including for example channel characteristics, noise levels etc. In response to these parameters, the capacity processor 113 determines an estimate of the current Shannon channel capacity of the communication link. The capacity processor 113 then generates a channel capacity indication which directly or indirectly comprises information of the determined channel capacity estimate. The channel capacity indication may specifically comprise a representation of the channel capacity estimate or may for example comprise data that allows the channel capacity indication estimate to be determined.

The channel capacity indication is then transmitted to the first communication unit 101 by the second transmitter 109 where it is received by the first receiver 107. The first receiver 107 feeds the channel capacity indication to the transmit controller 115. In response, the transmit controller 115 sets a characteristic of a transmission by the first transmitter 105. Thus, a second message may be transmitted from the first communication unit 101 to the second communication unit 103 over the communication link using transmission characteristics which are determined in response to the channel capacity estimate determined by the capacity processor 113.

The use of a channel capacity estimate determined by a receiving communication unit as the basis for link adaptation provides a number of advantages.

In particular, the determination of a channel capacity estimate may be significantly less complex and require fewer computations than for many other metrics. For example, it has been proposed to determine and predict future values of the complex channel coefficients and to use these values for adapting the modulation to suit the channel coefficients. However, the determination and prediction of these channel coefficients require many more computations than the derivation and processing of a channel capacity estimate. Also algorithms and equations for determining suitable channel capacity estimates are well known and provide reliable estimates (including for complex multiple antenna scenarios).

As a specific example, the computation of a Shannon Capacity for an IEEE 802.11a/g system, assuming the channel coefficients and noise variance are known, requires 96 real products, 48 logarithms (achievable by a Look-Up Table) and 96 sums. This is less than the demapping or decoding operations performed for a single OFDM symbol of an IEEE 802.11a/g system. Moreover, the computation has to be performed only once per packet, i.e. for several tens of OFDM symbol.

Also, the channel capacity indication may e.g. be represented by a single scalar value rather than requiring a plurality of channel coefficients. This facilitates processing and communication of the metric.

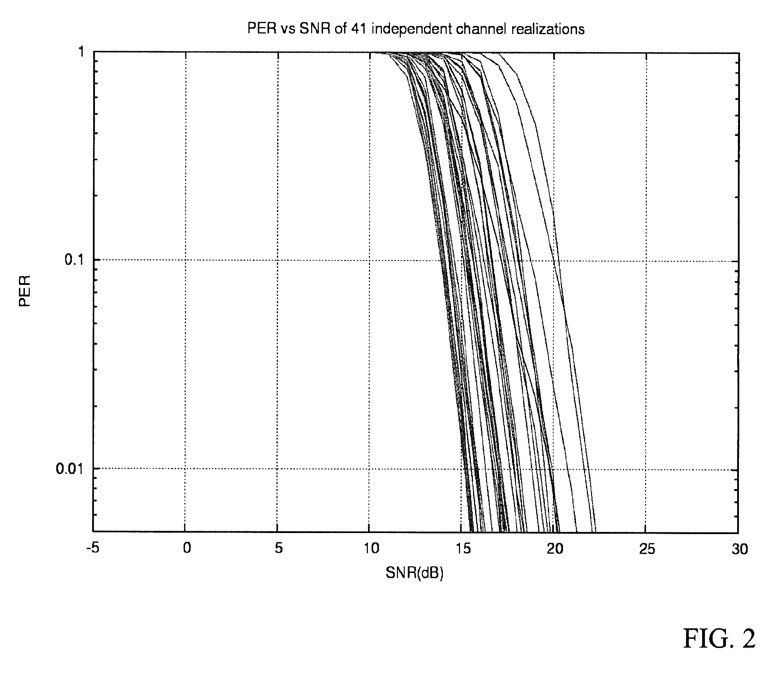

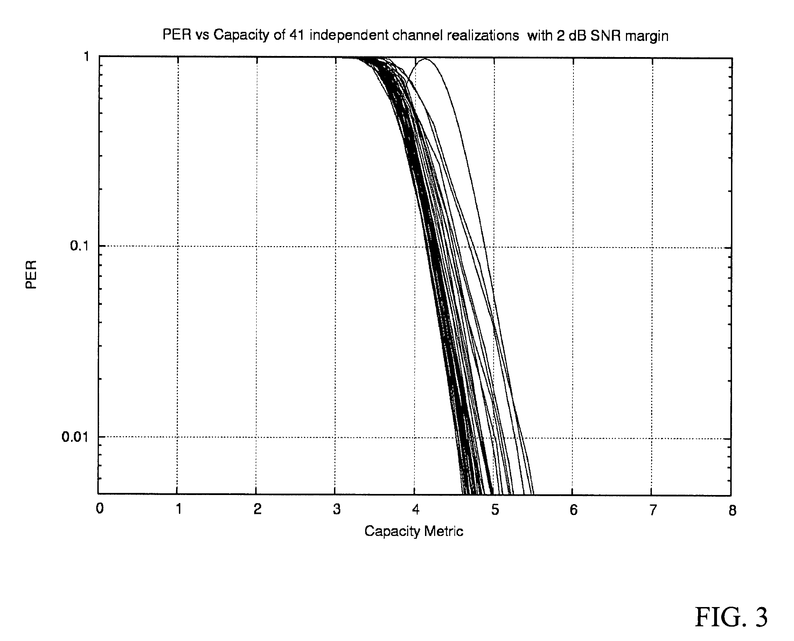

In addition, the channel capacity is a much better indication of the error rate and in particular the Packet Error Rate (PER) that can be achieved and the relationship is much less sensitive to different channel characteristics or error correction scheme etc. This may be seen from the examples of FIG. 2 and 3 which illustrate the relationship between PER and SNIR and PER and channel capacity respectively as determined by simulations. FIG. 2 illustrates the PER vs. SNIR performance of a 64QAM, ½ rate IEEE 802.11a transmission for 40 different independent multipath channels. A difference of 7dB can be observed for a PER of around 0.01. FIG. 3 illustrates the PER vs. Channel Capacity performance of a 64QAM, ½ rate IEEE 802.11a transmission for 40 different independent multipath channels. As can be seen, the variation between the different simulations is significantly reduced.

The PER may for example be determined from the channel capacity indication by use of a PER vs. channel capacity Look-Up Table (LUT) which can be computed by including a 2dB SNIR margin (i.e. overestimating the SNIR by 2dB) in the capacity computation, and Least Squares Fitting a curve to the simulation data. Due to the 2dB margin, all channels exhibit a PER vs. Capacity performance better than the relationship stored in the LUT and accordingly link adaptation based on this relationship will be reliable. A much higher margin than 2dB would have been required if the SNIR had been used as the link quality metric.

It will be appreciated that any suitable algorithm or criterion for determining the channel capacity estimate by the capacity processor 113 may be used. As a specific example, in a single antenna OFDM transmission, the Shannon Capacity can be computed as the sum over all useful sub-carriers of the logarithm of one plus the signal plus noise ratio on the sub-carrier.

In some embodiments, the channel capacity indications are determined and transmitted from the second communication unit 103 at a rate which is higher than twice the coherence time of the communication link. The coherence time of the channel is an indication of the rate of change of the communication channel and by communicating channel capacity indications at this rate, the link adaptation is sufficiently fast to follow the variations of the communication link. In particular, the rate of more than twice the coherence rate allows the link adaptation to follow fast fading variations of the communication link rather than just slow fading. This will typically provide improved performance of the link adaptation.

In some embodiments, the channel capacity indication may be normalized to the signal bandwidth of the communication link. The channel capacity indication may for example be expressed in bits/s/Hz. Normalizing the channel capacity indication allows for the capacity indication to be independent of the bandwidth. This may be very useful for systems comprising several communication modes having different bandwidths (e.g. channel bundling systems). In this way, the capacity typically varies between 0 and 20 bits/s/Hz which typically can be represented with reasonable precision by a single byte value.

In some embodiments, the first communication unit 101 is operable to predictively filter the received channel capacity indications. For example, the first communication unit 101 may apply predictive filtering to the latest received channel capacity values in order to determine an estimated channel capacity for the time of transmission of the second message. The predictive filtering of a channel capacity estimate is much simpler than predictive filtering of a large number of channel coefficients.

The first communication unit 101 may in some embodiments combine the channel capacity indication with other information such as for example information obtained from retransmission requests of an Automatic Repeat reQuest (ARQ)scheme.

Also, the channel capacity indication may in some embodiments be communicated in retransmission response messages transmitted from the second communication unit. For example, every ACKnowledge (ACK) and NonACKnowledge (NACK) message transmitted from the second communication unit may comprise a channel capacity indication. This may allow an effective communication of link adaptation information and may for example allow the same physical and logical channels to be used for communication of channel capacity indications and AQR response messages.

In some embodiments, a time indication may be transmitted with the channel capacity indication. For example, each channel capacity indication may be time stamped thereby allowing the relevance of the channel capacity indication to the current time instant to be evaluated. This may in particular facilitate predictive filtering of the channel capacity indication.

In some embodiments, the capacity processor 113 may be operable to determine more than one channel capacity indication. In particular, the capacity processor 113 may determine a plurality of channel capacity indications by using different algorithms. For example, the most appropriate formula for calculating the channel capacity estimate may depend on the specific coding scheme used at the transmitter side. In this case, the second communication unit 103 may calculate a channel capacity value for each coding scheme where each calculation is based on a different formula.

The second communication unit may transmit the different channel capacity values to the first communication unit and the transmit controller 115 may select the suitable channel capacity measure to use in response to the currently applied (or to be applied) characteristics.

For example, if the first communication unit is a two-antenna transmitter that can transmit at four different bit rates using space-time block coding and at four other bit rates using two independent Multiple-Input Multiple-Output (MIMO) streams, the appropriate formula for the channel capacity is different for the first four bit rates and the other rates. In order to allow the first communication unit to select one bit rate among the eight bit rates, it is advantageous for the second communication unit to feed back two different channel capacity values (one for each formula) for better performance.

In some embodiments, the first communication unit 101 and the second communication unit 103 may furthermore exchange association information which allows an error rate to be associated with e.g. channel capacities, channel characteristics and/or other error rates.

For example, the PER which can be achieved by the second receiver for different channel capacities, channel characteristics and/or bit rates may be determined through measurements or simulations. This information, which may be specific to the manufacturer or even individual receiver, may be transmitted to the first communication unit. Accordingly, the first communication unit may determine the PER which will be obtained at the specific second receiver for the specific channel capacity, channel characteristics and/or bit error rate. Accordingly, a much more accurate and customized link adaptation may be achieved.

In some embodiments, the communication units may exchange tables containing their receiver PER performance for a pre-agreed set of channels, bit-rates and Shannon channel capacity values. This set may be standardized in order to ensure optimum interoperability between the products of different manufacturers.

In some embodiments, the first communication unit may furthermore transmit the channel capacity indication to other communication units. For example, in an ad hoc network, time-stamped capacity values may be propagated to neighbouring nodes which may use this information (for example by applying prediction filtering) to improve the efficiency of the ad-hoc routing algorithms.

The invention can be implemented in any suitable form including hardware, software, firmware or any combination of these. However, preferably, the invention is implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with the preferred embodiment, it is not intended to be limited to the specific form set forth herein. Rather, the scope of the present invention is limited only by the accompanying claims. In the claims, the term comprising does not exclude the presence of other elements or steps. Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. In addition, singular references do not exclude a plurality. Thus references to "a", "an", "first", "second" etc do not preclude a plurality.

## Claims

1. A communication system comprising:
means for transmitting a first message from a first communication unit to a second communication unit over a communication link;
means in the second communicating unit for determining a channel capacity indication associated with the communication link;
means for transmitting the channel capacity indication from the second communication unit to the first communication unit;
means for transmitting a second message from the first communication unit to the second communication unit; and
means for setting a characteristic of the transmission of the second message in response to the channel capacity indication.

2. The communication system as claimed in claim 1 wherein the second communication unit comprises means for determining the channel capacity indication in response to the first message.

3. The communication system claimed in claim 1 or 2 wherein the first communication unit comprises means for predictively filtering received channel capacity indications.

4. The communication system claimed in any of the previous claims further comprising means for communicating error rate to channel capacity association information between the first and second communication unit.

5. The communication system claimed in any of the previous claims further comprising means for communicating error rate to channel characteristic association information between the first and second communication unit.

6. The communication system claimed in claim 5 wherein the error rate is a Packet Error Rate (PER).

7. The communication system claimed in any of the previous claims further comprising means for communicating packet error rate to bit error rate association information between the first and second communication unit.

8. The communication system claimed in any of the previous claims 4 to 7 wherein the means for setting the characteristic is further operable to set the characteristic in response to the association information.

9. The communication system claimed in any of the previous claims wherein the means for determining the channel capacity indication is operable to determine the channel capacity indication in response to a first channel capacity estimation algorithm and the second communication unit further comprises means for determining a second channel capacity indication associated with the communication link in response to a second channel capacity estimation algorithm.

10. The communication system claimed in claim 9 wherein the second communication unit further comprises means for transmitting the second channel capacity indication from the second communication unit to the first communication unit; and the first communication unit comprises means for selecting between the channel capacity indication and the second channel capacity indication in response to a transmit characteristic associated with the communication link.

11. The communication system claimed in any of the previous claims wherein the channel capacity indication is a Shannon channel capacity indication.

12. The communication system claimed in any of the previous claims further comprising means for communicating a time indication associated with the channel capacity indication.

13. The communication system claimed in any of the previous claims wherein the means for transmitting the channel capacity indication comprises means for transmitting the channel capacity indication in a retransmission response message.

14. The communication system claimed in any of the previous claims wherein the first and second messages belong to different data packets.

15. The communication system claimed in any of the previous claims wherein the second communication unit is operable to transmit channel capacity indications at a rate of more than twice the coherency time of the communication link.

16. The communication system claimed in any of the previous claims further comprising means of communicating the channel capacity indication from the first communication unit to a third communication unit.

17. A communication unit comprising:
means for transmitting a first message from the communication unit to a second communication unit over a communication link;
means for receiving a channel capacity indication associated with the communication link from the second communication unit;
means for transmitting a second message from the first communication unit to the second communication unit; and
means for setting a characteristic of the transmission of the second message in response to the channel capacity indication.

18. A communication unit comprising:
means for receiving a first message from a second communication unit over a communication link;
means for determining a channel capacity indication associated with the communication link; and
means for transmitting the channel capacity indication to the second communication unit.

19. A method of link adaptation for a communication system, the method comprising the steps of:
transmitting a first message from a first communication unit to a second communication unit over a communication link;
determining, in the second communicating unit, a channel capacity indication associated with the communication link;
transmitting the channel capacity indication from the second communication unit to the first communication unit;
transmitting a second message from the first communication unit to the second communication unit; and
setting a characteristic of the transmission of the second message in response to the channel capacity indication.

20. A method of transmitting from a communication unit, the method comprising the steps of:
transmitting a first message from the communication unit to a second communication unit over a communication link;
receiving a channel capacity indication associated with the communication link from the second communication unit;
transmitting a second message from the first communication unit to the second communication unit; and
setting a characteristic of the transmission of the second message in response to the channel capacity indication.

21. A method of transmitting link adaptation information, the method comprising the steps of:
means for receiving a first message from a second communication unit over a communication link;
means for determining a channel capacity indication associated with the communication link; and
means for transmitting the channel capacity indication from to the second communication unit.
